Europäisches Patentamt

European Patent Office

Office européen des brevets

(19)

(11) Veröffentlichungsnummer: **0 231 464**
**A2**

# (12) EUROPÄISCHE PATENTANMELDUNG

(21) Anmeldenummer: 86116390.5

(22) Anmeldetag: 26.11.86

(51) Int. Cl.4: **G03H 1/24**

(30) Priorität: 07.01.86 DE 3600146

(43) Veröffentlichungstag der Anmeldung:
**12.08.87 Patentblatt 87/33**

(84) Benannte Vertragsstaaten:
**AT BE CH DE ES FR GB GR IT LI NL SE**

(71) Anmelder: **Seele, Gerd, Dipl.-Ing.**
**Westgasterweg 4**
**D-2960 Aurich(DE)**

(72) Erfinder: **Seele, Gerd, Dipl.-Ing.**
**Westgasterweg 4**
**D-2960 Aurich(DE)**
Erfinder: **Mach, Dieter, Dipl.-Phys.**
**Gneisenaustrasse 7**
**D-3200 Hildesheim(DE)**
Erfinder: **Schipper, Wilfried, Dipl.-Phys.**
**Am Wendehafen 5**
**D-2900 Oldenburg(DE)**

(74) Vertreter: **Goddar, Heinz J., Dr. et al**
**FORRESTER & BOEHMERT**
**Widenmayerstrasse 4/I**
**D-8000 München 22(DE)**

(54) Verfahren und Vorrichtung zum achromatischen Rekonstruieren von Transmissionshologrammen.

(57) Verfahren zum achromatischen Rekonstruieren von auf einer Hologrammplatte oder dergleichen angeordneten monochromatischen Transmissionshologrammen mit nicht-kohärentem weißen Licht, bei dem die chromatische Dispersion des Transmissionshologrammes durch ein Beugungsgitter oder dergleichen mit im wesentlichen reziproker chromatischer Aberration kompensiert wird, dadurch gekennzeichnet, daß der Sepktralbereich des Weißlichtes eingeschränkt wird, sowie Verfahren insbesondere zu seiner Durchführung.

FIG. 3

## Verfahren und Vorrichtung zum achromatischen Rekonstruieren von Transmissionshologrammen

Die Erfindung betrifft ein Verfahren zum achromatischen Rekonstruieren von auf einer Hologrammplatte oder dergleichen angeordneten Laser-Transmissionshologrammen mit nicht-kohärentem weißen Licht, bei dem die chromatische Dispersion des Transmissionshologrammes durch ein Beugungsgitter oder dergleichen mit im wesentlichen reziproker chromatischer Aberration kompensiert wird, sowie eine Vorrichtung zum achromatischen Rekonstruieren von auf einer Hologrammplatte oder dergleichen angeordneten Laser-Transmissionshologrammen mit nicht-kohärentem weißen Licht, mit einer Weißlichtquelle und einem Beugungsgitter oder dergleichen zum Kompensieren der chromatischen Dispersion des Transmissionshologramms mit im wesentlichen zu derjenigen des Transmissionshologramms reziproker chromatischer Aberration, insbesondere zur Durchführung dieses Verfahrens.

Aus Applied Physics Letters, Vol. 9, Nr. 12, 1966, Seiten 417/418, sowie aus der DE-OS 20 60 170 ist es bereits bekannt, in der vorstehend angegebenen Weise die chromatische Dispersion des Transmissionshologrammes durch ein Transmissionsgitter oder dergleichen zu korrigieren, wobei die DE-OS 20 60 170 über den insoweit aus der angegebenen Literaturstelle aus Applied Physics Letters bekannten Stand der Technik hinaus noch angibt, eine mehrdimensionale Korrektur dadurch zu bewerkstelligen, daß zur Wiedergabe des Transmissionshologramms eine Kugelwelle verwendet wird, in die eine chromatische Aberration derart eingeführt wird, daß die Aberration des Hologramms gerade kompensiert wird. Das bekannte Verfahren sowie die bekannte Vorrichtung haben sich im Prinzip durchaus bewährt, wobei aber die nichtkompensierte chromatische Aberration immer noch verhältnismäßig groß ist, wodurch die "Bild"-Qualität leidet. Auch geben das bekannte Verfahren sowie die bekannte Vorrichtung keine Möglichkeit, Transmissionshologramme der beschriebenen Art echtfarbig wiederzugeben.

Der Erfindung liegt daher die Aufgabe zugrunde, das gattungsgemäße Verfahren sowie die gattungsgemäße Vorrichtung derart weiterzubilden, daß die nicht-kompensierte chromatische Aberration zur Verbesserung der Bildqualität verringert und insbesondere eine echtfarbige Wiedergabe von durch Hologrammaufnahmen abgebildeten Objekten möglich ist.

Erfindungsgemäß wird diese Aufgabe bei dem gattungsgemäßen Verfahren in Weiterbildung desselben dadurch gelöst, daß der Spektralbereich des Weißlichtes eingeschränkt wird.

Vorzugsweise ist dabei vorgesehen, daß zum Einschränken des Spektralbereiches des Rekonstruktions-Weißlichtes mindestens ein in den Rekonstruktionsstrahlengang eingebrachtes Farbfilter verwendet wird.

Auch kann vorgesehen sein, daß als Beugungsgitter ein zwischen Weißlichtquelle und Hologrammplatte angeordnetes Transmissionsgitter verwendet wird.

Die Erfindung sieht weiterhin gegebenenfalls vor, daß mehrere in unterschiedlichen Farben zu rekonstruierende Transmissionshologramme im Rekonstruktionsstrahlengang als Ensemble überlagert werden und das Ensemble mit Weißlicht-Rekonstruktionsstrahlen jeweils entsprechenden Spektralbereiches beaufschlagt wird.

Eine weitere Ausführungsform der Erfindung ist dadurch gekennzeichnet, daß das Ensemble auf einer einzigen Hologrammplatte oder dergleichen untergebracht wird.

Die Erfindung schlägt weiterhin vor, daß ein Ensemble mit drei hintereinander angeordneten Farbauszugshologrammen und drei Rekonstruktionsstrahlen entsprechenden Spektralbereiches verwendet werden.

Auch kann erfindungsgemäß vorgesehen sein, daß die Farbauszüge des Ensembles mit einem Argon-Laser (grün, entsprechend einer Wellenläge von 514 nm; blau, entsprechend einer Wellenlänge von 476 nm), einem Rubin-Laser (rot, entsprechend einer Wellenlänge von 694 nm) oder HeNe-Laser - (rot, entsprechend einer Wellenlänge von 632 nm) aufgenommen werden.

Eine weitere Ausführungsform der Erfindung sieht vor, daß zum Rekonstruieren drei Weißlichtquellen mit jeweils nachgeordnetem Farbfilter verwendet werden.

Ferner kann die Erfindung dadurch gekennzeichnet sein, daß zum Wiedergeben eines Blauauszuges eine Zirkonium-Bogenlampe verwendet wird.

Auch kann erfindungsgemäß vorgesehen sein, daß zum Rekonstruieren eine einzige Weißlichtquelle in Verbindung mit einer Anordnung aus Strahlteilern, Spiegel(n) und Farbfilter(n) verwendet wird.

Eine weitere Ausführungsform des erfindungsgemäßen Verfahrens schlägt vor, daß die farbigen Rekonstruktionsstrahlen in einem gegenseitigen Winkelabstand von, in der Ebene der Hologrammplatte oder dergleichen gesehen, 120° zueinander angeordnet werden.

Alternativ sieht die Erfindung gegebenenfalls auch vor, daß die Dispersion des Beugungsgitters zur Spektralbereichseinschränkung des Weißlichtes verwendet wird.

Die erfindungsgemäße Vorrichtung der gattungsgemäßen Art ist dadurch weitergebildet, daß zum Einschränken des Spektralbereiches des Weißlichtes in den Rekonstruktionsstrahlengang mindestens ein Farbfilter eingeschaltet ist.

Alternativ hierzu kann auch vorgesehen sein, daß zum Einschränken des Septralbereiches des Weißlichtes eine dem Beugungsgitter zugeordnete Spiegelanordnung vorgesehen ist.

Weiterhin sieht die Erfindung gegebenenfalls vor, daß das Beugungsgitter ein zwischen der Weißlichtquelle und der Hologrammplatte angeordnetes Transmissionsgitter ist.

Auch kann vorgesehen sein, daß im Rekonstruktionsstrahlengang mehrere in unterschiedlichen Farben zu rekonstruierende Transmissionshologramme als Ensemble hintereinander angeordnet sind; und daß das Ensemble mit Weißlicht-Rekonstruktionsstrahlen jeweils entsprechenden Spektralbereiches beaufschlagbar ist.

Eine weitere Ausführungsform der Erfindung ist dadurch gekennzeichnet, daß das Ensemble auf einer einzigen Hologrammplatte oder dergleichen untergebracht ist.

Die Erfindung schlägt gegebenenfalls auch vor, daß das Ensemble drei hintereinander angeordnete Farbauzugshologramme aufweist, welche mit drei Rekonstruktionsstrahlen entsprechenden Spektralbereiches beaufschlagbar sind.

Eine weitere Ausführungsform der Erfindung sieht vor, daß die Farbauszüge des Ensembles mit einem Argon-Laser (grün, entsprechend einer Wellenlänge von 514 nm; blau, entsprechend einer Wellenlänge von 476 nm), einem Rubin-Laser (rot, entsprechend einer Wellenlänge von 694 nm) oder HeNe-Laser (rot, entsprechend einer Wellenlänge von 632 nm) aufgenommen sind.

Es kann auch vorgesehen sein, daß zum Rekonstruieren drei Weißlichtquellen mit jeweils nachgeordnetem Farbfilter vorgesehen sind.

Eine andere Ausführungsform der Erfindung - schlägt vor, daß zum Wiedergeben eines Blauauszuges eine Zirkonium-Bogenlampe vorgesehen ist.

Auch kann vorgesehen sein, daß zum Rekonstruieren eine einzige Weißlichtquelle in Verbindung mit einer Anordnung von Strahlteilern, Spiegel(n) und Farbfilter(n) vorgesehen ist.

Schließlich sieht die Erfindung gegebenenfalls auch vor, daß die farbigen Rekonstruktionsstrahlen in gegenseitigen Winkelabständen von, in der Ebene der Hologrammplatte oder dergleichen gesehen, 120° zueinander angeordnet sind.

Bei der erfindungsgemäßen Vorgehensweise hebt die Dispersion des vorzugsweise vorgesehenen Transmissionsgitter gerade die Dispersion des Transmissionshologrammes auf, so daß in der betreffenden Raumrichtung, in der also die Ablenkung des Lichtes durch das Transmissionsgitter erfolgt, die chromatische Aberration des rekonstruierten Bildes für den senkrecht auf das Hologramm blickenden Betrachter aufgehoben ist. Natürlich kann eine zusätzliche Kompensation noch dadurch erreicht werden, daß neben dem Transmissionsgitter eine Kugelwelle vorgesehen wird, wie dies in der DE-OS 20 60 170 beschrieben ist. Es ist zweckmäßig, daß in die Gesamtanordnung verschiedene Sichtblenden eingefügt werden, um eine Blendung des Betrachters auszuschließen. Das verwendete Transmissionsgitter, üblicherweise ein holographisches Phasengitter, sollte dabei etwas größer als das Transmissionshologramm sein, welches üblicherweise ein Laser-Transmissionshologramm ist, um auf diese Weise über die gesamte Fläche des Transmissionshologramms ein achromatisches Bild zu erhalten, wobei das Gitter vorzugsweise zum Hologramm hin geneigt angeordnet sein kann.

Wird die Weißlichtquelle bei der erfindungsgemäßen Vorrichtung beispielsweise mittels eines entsprechenden Farb filters versehen, so ist die Wiedergabe des Transmissionshologramms in jeder beliebigen, dementsprechenden Farbe möglich. Hierdurch wird die nicht kompensierte chromatische Aberration verringert, was der "Bild"-Qualität zugute kommt. Mehrere, vorzugsweise drei übereinander angeordnete Hologramme (Sandwich- oder Mehrfachbelichtung) können dann unabhängig voneinander, d.h. ohne Auftreten von Geisterbildern durch Rekonstruktion eines Hologrammes durch mehrere Rekonstruktionsstrahlen, rekonstruiert werden, wenn die zu den einzelnen Hologrammen gehörenden Transmissionsgitter oder dergleichen und damit die Einfallsrichtungen der Rekonstruktionsstrahlen um einen Winkel von etwa 120 °um die "optische Achse des Betrachters" gegeneinander gedreht angeordnet werden. Eine Echtfarbenwiedergabe ist möglich, wenn die drei übereinander angeordneten Hologramme Farbauszüge eines Objektes darstellen, welche mit entsprechenden Lasern aufgenommen sind. Die Rekonstruktion der Farbauszüge erfolgt über entsprechend farbige Lichtquellen, beispielsweise Niedervolt-Halogenstrahler mit Farbfilter, wobei die entsprechenden Farbfilter üblicherweise zwischen der Lichtquelle und dem jeweiligen Transmissionsgitter oder dergleichen angeordnet sind (vgl. US-PS 3 695 744).

Einer der wichtigsten Vorteile der Erfindung liegt in der Möglichkeit, die Farbwiedergabe des fertigen Transmissionshologramms zu beeinflussen, also stufenlose Farbmodulation, Falschfarbwiedergabe, Optimierung der Farbbalance etc. bei Einsatz einfacher Lichtquellen zu gewährleisten. Werden nicht Farbauszüge eines Objektes, sondern Hologramme verschiedener Objekte überlagert, so ist z.B. eine stufenlose Überblendung von einem Motiv zum anderen möglich, wodurch eine Bewegung oder "Ver wandlung" des Objektes simuliert werden können.

Weitere Merkmale und Vorteile der Erfindung ergeben sich aus der nachstehenden Beschreibung, in der Ausführungsbeispiele anhand der schematischen Zeichnung im einzelnen erläutert sind. Dabei zeigt:

Fig. 1 eine holographische Wiedergabeanordnung zum achromatischen Rekonstruieren von monochromatischen Transmissionshologrammen nach dem Stand der Technik;

Fig. 2 ein erstes Ausführungsbeispiel der Erfindung im Schnitt durch die "optische Achse des Betrachters";

Fig. 3 ein weiteres Ausführungsbeispiel der Erfindung in der Ansicht, vom Betrachter her gesehen; und

Fig. 4 die Möglichkeit der Rekonstruktionsstrahlerzeugung unterschiedlicher Farbe mittels einer einzigen Lichtquelle.

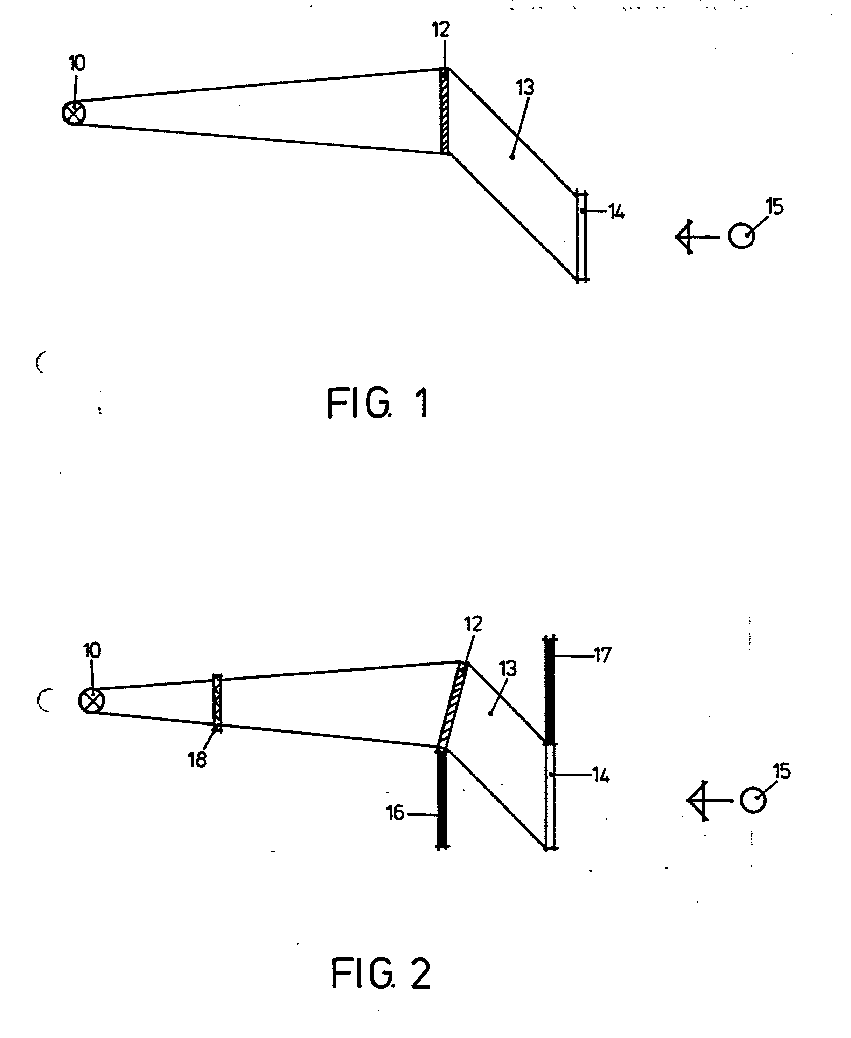

Wie Fig. 1 erkennen läßt, weist die dort wiedergegebene Anordnung, wie sie z.B. aus Applied Physics Letters Vol. 9, Nr. 12, 1966, Seiten 417/418, bekannt ist, eine Weißlichtquelle 10 mit nachgeordnetem Transmissionsgitter 12 auf, aus der abgebeugtes Licht 13 auf eine Hologrammplatte 14 gelangt, die durch einen Betrachter 15 beobachtbar ist. Das Transmissionsgitter 12 ist dabei ein holographisches Phasengitter, welches etwas größer ist als die Hologrammplatte 14 bzw. das darauf angeordnete Transmissionshologramm, wodurch man über die gesamte Fläche des Transmissionshologrammes ein achromatisches Bild erhält.

Bei der Anordnung von Fig. 2, welche ein sehr einfaches Ausführungsbeispiel der Erfindung darstellt, ist im Anschluß an die Weißlichtquelle 10 vor dem Transmissionsgitter 12, welches geneigt angeordnet ist, ein Farbfilter 18 angeordnet, wobei Sichtblenden 16, 17 den Betrachter 15 gegen Blendung schützen.

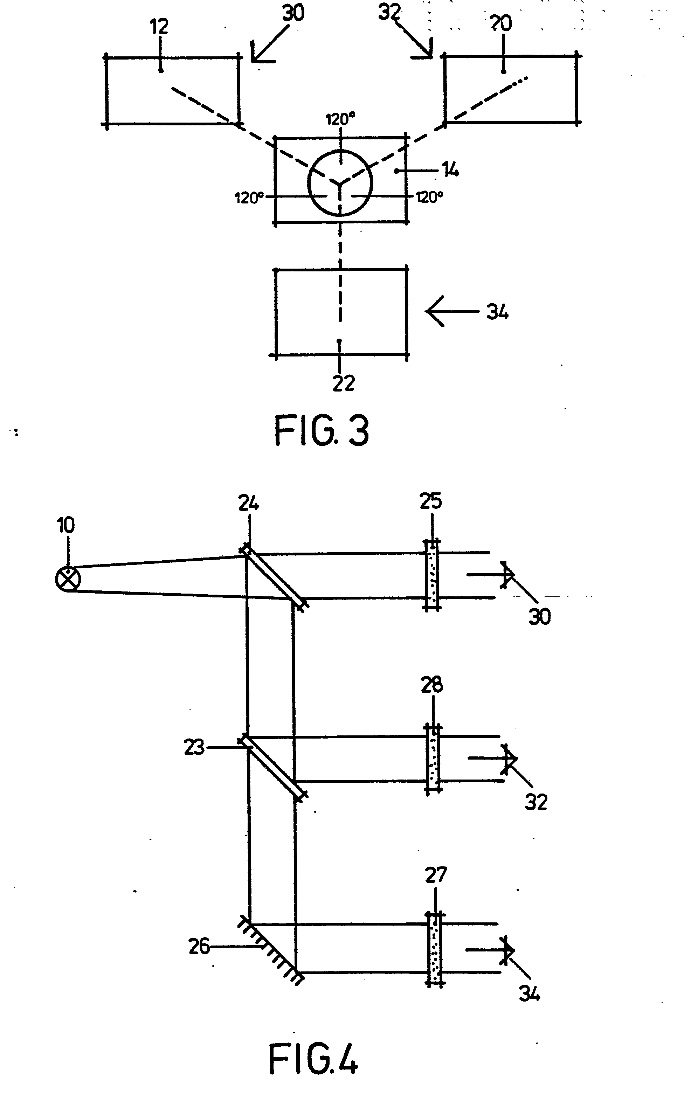

Fig. 3 läßt erkennen, wie bei der dort beschriebenen Anordnung mittels dreier Transmissionsgitter 12, 20, 22 drei verschiedenfarbige Rekonstruktionsstrahlen erzeugt werden -die entsprechenden Farbfilter, Weißlichtquellen etc. sind dort nicht wiedergegeben -die unter gegenseitigen Winkeln von 120° auf die Hologrammplatte 14 und ein darauf angeordnetes Ensemble aus drei Farbauszugshologrammen fallen, wobei die Transmissionsgitter 12, 20, 22 mit entsprechenden farbigen Rekonstruktionsstrahlen 30, 32, bzw.34 beaufschlagt sind.

Fig. 4 zeigt, wie von einer einzigen Weißlichtquelle 10 ausgehendes Licht mittels zweier Strahlteiler 23, 24, eines Spiegels 26 und dreier Farbfilter 25, 27, 28 zur Erzeugung von drei Rekonstruktionsstrahlen 30, 32, 34 eingesetzt wird.

Statt der in Fig. 4 vorgesehenen Farbfilter kann auch die Dispersion des Transmissionsgitters zur Trennung der einzelnen "Farbkomponenten" des Weißlichtes genutzt werden, wobei jedoch eine verhältnismäßig komplizierte Anordnung von Spiegeln erforderlich ist, da die Dispersionsrichtungen für z.B. drei Farbauszüge um jeweils 120° gegeneinander gedreht sein müssen.

Die in der vorstehenden Beschreibung, in der Zeichnung sowie den Ansprüchen offenbarten Merkmale der Erfindung können sowohl einzeln als auch in beliebiger Kombination für die Verwirklichung der Erfindung in ihren verschiedenen Ausführungsformen wesentlich sein.

Bezugszeichenliste

10 Weißlichtquelle
12 Transmissionsgitter
13 abgebeugtes Licht
14 Hologrammplatte
15 Betrachter
16 Sichtblende
17 Sichtblende
18 Farbfilter
20 Transmissionsgitter
22 Transmissionsgitter
23 Strahlteiler
24 Strahlteiler
25 Farbfilter
26 Spiegel
27 Farbfilter
28 Farbfilter
30 Rekonstruktionsstrahl
32 Rekonstruktionsstrahl
34 Rekonstruktionsstrahl

Ansprüche

1. Verfahren zum achromatischen Rekonstruieren von auf Hologrammplatte oder dergleichen angeordneten Laser-Transmissionshologrammen mit nicht-kohärentem weißen Licht, bei dem die chromatische Dispersion des Transmissionshologrammes durch ein Beugungsgitter oder dergleichen mit im wesentlichen reziproker chromatischer Aberration kompensiert wird, dadurch gekennzeichnet, daß der Spektralbereich des Weißlichtes eingeschränkt wird.

2. Verfahren nach Anspruch 1, dadurch gekennzeichnet, daß zum Einschränken des Spektralbereiches des Rekonstruktions-Weißlichtes mindestens ein in den Rekonstruktionsstrahlengang eingebrachtes Farbfilter verwendet wird.

3. Verfarhen nach Anspruch 1 oder 2, dadurch gekennzeichnet, daß als Beugungsgitter ein zwischen Weißlichtquelle und Hologrammplatte angeordnetes Transmissionsgitter verwendet wird.

4. Verfahren nach einem der vorangehenden Ansprüche, dadurch gekennzeichnet, daß mehrere in unterschiedlichen Farben zu rekonstruierende Transmissionshologramme im Rekonstruktionsstrahlengang als Ensemble überlagert werden und das Ensemble mit Weißlicht-Rekonstruktionsstrahlen jeweils entsprechenden Spektralbereiches beaufschlagt wird.

5. Verfahren nach Anspruch 4, dadurch gekennzeichnet, daß das Ensemble auf einer einzigen Hologrammplatte oder dergleichen untergebracht wird.

6. Verfahren nach Anspruch 4 oder 5, dadurch gekennzeichnet, daß ein Ensemble mit drei hintereinander angeordneten Farbauszugshologrammen und drei Rekonstruktionsstrahlen entsprechenden Spektralbereiches verwendet werden.

7. Verfahren nach Anspruch 6, dadurch gekennzeichnet, daß die Farbauszüge des Ensembles mit einem Argon-Laser (grün, entsprechend einer Wellenlänge von 514 nm; blau, entsprechend einer Wellenlänge von 476 nm), einem Rubin-Laser - (rot, entsprechend einer Wellenlänge von 694 nm) oder HeNe-Laser (rot, entsprechend einer Wellenlänge von 632 nm) aufgenommen werden.

8. Verfahren nach Anspruch 6 oder 7, dadurch gekennzeichnet, daß zum Rekonstruieren drei Weißlichtquellen mit jeweils nachgeordnetem Farbfilter verwendet werden.

9. Verfahren nach einem der Ansprüche 6 bis 8, dadurch gekennzeichnet, daß zum Wiedergeben eines Blauauszuges eine Zirkonium-Bogenlampe verwendet wird.

10. Verfahren nach einem der Ansprüche 4 bis 7, dadurch gekennzeichnet, daß zum Rekonstruieren eine einzige Weißlichtquelle in Verbindung mit einer Anordnung aus Strahlteilern, Spiegel(n) und Farbfilter(n) verwendet wird.

11. Verfahren nach einem der Ansprüche 4 bis 10, dadurch gekennzeichnet, daß die farbigen Rekonstruktionsstrahlen in einem gegenseitigen Winkelabstand von, in der Ebene der Hologrammplatte oder dergleichen gesehen, 120° zueinander angeordnet werden.

12. Verfahren nach Anspruch 1 oder nach einem der Ansprüche 3 bis 10 und Anspruch 1, dadurch gekennzeichnet, daß die Dispersion des Beugungsgitters zur Spektralbereichseinschränkung des Weißlichtes verwendet wird.

13. Vorrichtung zum achromatischen Rekonstruieren von auf einer Hologrammplatte oder dergleichen angeordneten Laser-Transmissionshologrammen mit nicht-kohärentem weißen Licht, mit einer Weißlichtquelle und einem Beugungsgitter oder dergleichen zum Kompensieren der chromatischen Dispersion des Transmissionshologramms mit im wesentlichen zu derjenigen des Transmissionshologramms reziproker chromatischer Aberration, insbesondere zur Durchführung des Verfahrens nach einem der vorangehenden Ansprüche, dadurch gekennzeichnet, daß zum Einschränken des Spektralbereiches des Weißlichtes in den Rekonstruktionsstrahlengang mindestens ein Farbfilter (18; 25, 27, 28) eingeschaltet ist.

14. Vorrichtung zum achromatischen Rekonstruieren von auf einer Hologrammplatte oder dergleichen angeordneten Laser-Transmissionshologrammen mit nicht-kohärentem wießen Licht, mit einer Weißlichtquelle und einem Beugungsgitter oder dergleichen zum Kompensieren der chromatischen Dispersion des Transmissionshologramms mit im wesentlichen zu derjenigen des Transmissionshologramms reziproker chromatischer Aberration, insbesondere zur Durchführung des Verfahrens nach einem der Ansprüche 1 bis 12, dadurch gekennzeichnet, daß zum Einschränken des Spektralbereiches des Weißlichtes eine dem Beugungsgitter (12) zugeordnete Spiegelanordnung vorgesehen ist.

15. Vorrichtung nach Anspruch 13 oder 14, dadurch gekennzeichnet, daß das Beugungsgitter ein zwischen der Weißlichtquelle (10) und der Hologrammplatte (14) angeordnetes Transmissionsgitter (12) ist.

16. Vorrichtung nach einem der Ansprüche 13 bis 15, dadurch gekennzeichnet, daß im Rekonstruktionsstrahlengang mehrere in unterschiedlichen Farben zu rekonstruierende Transmissionshologramme als Ensemble (14) hintereinander angeordnet sind; und daß das Ensemble (14) mit Weißlicht-Rekonstruktionsstrahlen (30, 32, 34) jeweils entsprechenden Spektralbereiches beaufschlagbar ist.

17. Vorrichtung nach Anspruch 16, dadurch gekennzeichnet, daß das Ensemble auf einer einzigen Hologrammplatte (14) oder dergleichen untergebracht ist.

18. Vorrichtung nach Anspruch 16 oder 17, dadurch gekennzeichnet, daß das Ensemble drei hintereinander angeordnete Farbauszugshologramme aufweist, welche mit drei Rekonstruktionsstrahlen (30, 32, 34) entsprechenden Spektralbereiches beaufschlagbar sind.

19. Vorrichtung nach Anspruch 18, dadurch gekennzeichnet, daß die Farbauszüge des Ensembles (14) mit einem Argon-Laser (grün, entsprechend einer Wellenlänge von 514 nm; blau, entsprechend einer Wellenlänge von 476 nm), einem Rubin-Laser (rot, entsprechend einer Wellenlänge von 694 nm) oder He-Ne-Laser (rot, entsprechend einer Wellenlänge von 632 nm) aufgenommen sind.

20. Vorrichtung nach Anspruch 18 oder 19, dadurch gekennzeichnet, daß zum Rekonstruieren drei Weißlichtquellen (10) mit jeweils nachgeordnetem Farbfilter (18) vorgesehen sind.

21. Vorrichtung nach einem der Ansprüche 18 bis 20, dadurch gekennzeichnet, daß zum Wiedergeben eines Blauauszuges eine Zirkonium-Bogenlampe vorgesehen ist.

22. Vorrichtung nach einem der Ansprüche 16 bis 19, dadurch gekennzeichnet, daß zum Rekonstruieren eine einzige Weißlichtquelle (10) in Verbindung mit einer Anordnung von Strahlteilern (23, 24), Spiegel(n) (26) und Farbfilter(n) (25, 27, 28) vorgesehen ist.

23. Vorrichtung nach einem der Ansprüche 16 bis 22, dadurch gekennzeichnet, daß die farbigen Rekonstruktionsstrahlen (30, 32, 34) in gegenseitigen Winkelabständen von, in der Ebene der Hologrammplatte (14) oder dergleichen gesehen, 120° zueinander angeordnet sind.

FIG. 1

FIG. 2

FIG. 3

FIG.4